# EUROPEAN PATENT APPLICATION

(11) **EP 4 553 853 A1**
(43) Date of publication of application: **14.05.2025**
(21) Application number: 24211165.6
(22) Date of filing: 06.11.2024
(51) Int. Cl.: G21B 1/19

(54) **MULTI-LAYERED FUSION FUEL TARGET**

(30) Priority: 13.11.2023 US 202318507900; 01.12.2023 US 202318526618
(71) Applicant: Blue Laser Fusion, Inc., Palo Alto, CA 94301 (US)
(72) Inventor: SUNAHARA, Atsushi, Palo Alto, CA 94301 (US); NAKAMURA, Shuji, Palo Alto, CA 94301 (US)
(74) Representative: Herrero & Asociados, S.L.

(57) **Abstract**

In an example, the present invention provides a fusion fuel target device for inertial confinement fusion (ICF). The device has a first fuel material region characterized by a first ignition temperature, the first fuel material region and a second fuel material region coupled to the first fuel material region.

## Description

### BACKGROUND OF INVENTION

From the beginning of time, human beings have developed energy sources from natural materials such as wood, coal, oil, and gas products. Unfortunately, burning wood and coal leads to major pollution issues, including adding undesirable carbon particles into the atmosphere. Oil and gas products also have similar limitations and have been a leading cause of "Global Warming." Renewable energy sources including nuclear, wind, hydroelectric, and solar are promising. However, such renewable energy sources have other shortcomings. Wind only works if the wind is blowing. Solar cannot be used when the sun goes down. Hydroelectric is limited to areas with water, and nuclear, although promising, has had major problems in generating waste and unreliable and dangerous reactors. One other promising energy source has been fusion energy.

Fusion energy is a type of energy production that occurs when two atomic nuclei fuse together, releasing a large amount of energy in the process. It is considered a potential source of clean and abundant energy, as the fuel for fusion reactions (mainly hydrogen) is abundant on Earth and the reactions produce no greenhouse gases or other harmful pollutants.

There are two main approaches to achieving fusion reactions: inertial confinement fusion (ICF) and magnetic confinement fusion (MCF).

Inertial confinement fusion (ICF) involves using high-energy lasers or particle beams to compress and heat a small pellet of hydrogen fuel, causing it to fuse. The fuel is typically a mixture of deuterium (D) and tritium (T), two isotopes of hydrogen. The fuel is contained within a small, spherical capsule called a hohlraum, which is placed at the center of a chamber filled with high-energy lasers or particle beams. When the lasers or particle beams are fired at the hohlraum, they create uniform x-ray emissions that uniformly heat and compress the fuel inside the hohlraum. This causes the fuel to reach the necessary temperature and pressure conditions for fusion to occur.

The main advantage of ICF is that it can potentially produce fusion reactions with a relatively small amount of fuel and at a relatively low cost. However, the process is still in the experimental stage and there are significant technical challenges to before it can be considered a practical source of energy.

Magnetic confinement fusion (MCF) involves using strong magnetic fields to contain and heat a plasma (a hot, ionized gas) of hydrogen fuel, causing it to fuse. The most common type of MCF is called tokamak fusion, which uses a toroidal (doughnut-shaped) chamber to contain the plasma. The plasma is held in the center of the chamber by strong magnetic fields, which are created by running current through a set of coil windings around the chamber. The plasma is heated by injecting energy into it, either through particle beams or through electromagnetic waves.

The main advantage of MCF is that it has the potential to produce fusion reactions on a larger scale, making it more suitable for generating electricity. However, it is a more complex and costly process than ICF and there are still significant technical challenges to overcome before it can be considered a practical source of energy.

Both ICF and MCF have made significant progress in recent years and there are several experimental facilities around the world working on these technologies. However, achieving sustained fusion reactions with net energy production (meaning the energy produced by the fusion reactions is greater than the energy required to initiate and sustain the reactions) remains a major technical challenge.

There are also other approaches to fusion energy being explored, such as magnetized target fusion and muon-catalyzed fusion. However, these approaches are still in the early stages of development. It is not yet clear if fusion energy will be viable as a source of energy.

From the above, fusion energy has the potential to be a clean and abundant source of energy, but significant technical challenges must be overcome before it can be considered a practical source of energy.

### SUMMARY OF INVENTION

According to the present invention, techniques related to fusion energy generation are provided. In particular, the present invention provides a fuel pellet and related method for fusion energy. More particularly, the present invention provides a fuel pellet having different ignition temperatures capable of ignition and thermonuclear burn from a laser fusion system with maximizing fusion gain while mitigating neutron emission. Merely by way of example, the invention can be applied to a variety of applications, including energy generation for power, spaceships, travel, other vehicles for air, land, and water, defense applications (e.g., satellite, aerospace, land and missile defense, submarines, boats), biotechnology, chemical, mechanical, electrical, and communication and/or data applications.

In an example, the present invention provides a fusion fuel target device for inertial confinement fusion (ICF). The device has a first fuel material region characterized by a first ignition temperature, the first fuel material region and a second fuel material region coupled to the first fuel material region. The device has a third fuel material region configured such that the first fuel material region being sandwiched between the second fuel material region and the third material fuel region. In an example, the second fuel material is configured within a center region and has a higher ignition temperature than the first fuel material region. In an example, the third fuel material region is an outer region and having a higher ignition temperature than the first fuel material region.

In an alternative example, the present invention provides a spherical-shaped target device for inertial fusion. The device has a plurality of multi-layered fuels and an outer most fuel layer is composed of a pB 11, pB 10 or a material which include at least pB11 or pB10.

In an example, the present invention provides a fuel target device, e.g., for an inertial confinement fusion process. The device has a center region comprising a first fuel material region characterized by a lowest ignition temperature or energy. The device has a second outer region surrounding the center region and comprising a second fuel material region characterized by a higher ignition temperature or energy than the lowest ignition temperature or energy of the first fuel material region. The device also has optionally, a third outer region surrounding the second outer region and comprising a third fuel material region characterized by a higher ignition temperature or energy than that of the higher ignition temperature or energy of the second fuel material region; and optionally, a fourth outer region surrounding the third outer region and comprising a fourth fuel material region characterized by a higher ignition temperature or energy than the higher ignition temperature or energy of the third fuel material region.

In an alternative example, the present invention provides a fusion fuel target device for inertial confinement fusion (ICF). The device has a first fuel material region characterized by a first ignition temperature, the first fuel material region and a second fuel material region coupled to the first fuel material region. The device has optionally, a third fuel material region configured such that the first fuel material region being sandwiched between the second fuel material region and the third material fuel region. The second fuel material is configured within a center region and has a higher ignition temperature than the first fuel material region. In an example, the third fuel material region is an outer region and having a higher ignition temperature than the first fuel material region.

Various benefits and/or advantages are achieved. In an example, the invention provides clean energy with a high efficiency (a low ignition temperature) and without a large number of neutrons. In other examples, the invention uses hydrogen and boron, which are two abundant and stable elements, as fusion fuel. In an example, the invention provides for a cost-effective and efficient method for producing fusion energy avoiding large uses of the low abundance of deuterium and tritium. Other than the economical aspect, the fusion reaction between hydrogen and boron does not provide neutrons as a byproduct. These and other benefits and/or advantages are achievable with the present device and related methods. Further details of these benefits and/or advantages can be found throughout the present specification and more particularly below.

A further understanding of the nature and advantages of the invention may be realized by reference to the latter portions of the specification and attached drawings.

### BRIEF DESCRIPTION OF THE DRAWINGS

In order to more fully understand the present invention, reference is made to the accompanying drawings. Understanding that these drawings are not to be considered limitations in the scope of the invention, the presently described embodiments and the presently understood best mode of the invention are described with additional detail through use of the accompanying drawings in which:
Figure 1 is a simplified diagram illustrating a target used for inertial confinement fusion (ICF) in an example according to the present invention.
Figure 2 is a simplified illustration of a fast ignition method with an additional picosecond or femtosecond pulse for the ignition according to an example of the present invention.
Figure 3 is a simplified diagram illustrating a fast ignition method with an additional picosecond or femtosecond pulse for the ignition according to an example of the present invention.
Figure 4 is a simplified diagram illustrating a fast ignition method with an additional picosecond or femtosecond pulse for the ignition using a novel target according to an example of the present invention.
Figure 5 is a simplified diagram illustrating another target used for inertial confinement fusion (ICF) in an example according to the present invention.
Figure 6 is a simplified diagram illustrating another target used for inertial confinement fusion (ICF) in an example according to the present invention.
Figure 7 is a simplified diagram illustrating an indirect ignition using a hohlraum according to an example of the present invention.
Figure 8 is a simplified diagram illustrating a target used for inertial confinement fusion (ICF) according to an example of the present invention.
Figure 9 is a simplified diagram illustrating another target for inertial confinement fusion (ICF) according to an example of the present invention.
Figure 10 shows an example of the present invention using a novel target and an inner irradiation technique.
Figure 11 is a simplified illustration of a fusion fuel target device for inertial confinement fusion (ICF) according to an example of the present invention.
Figure 12 is a simplified diagram illustrating another target used for inertial confinement fusion (ICF) in an example according to the present invention.

### DETAILED DESCRIPTION OF EXAMPLES

According to the present invention, techniques related to fusion energy generation are provided. In particular, the present invention provides a fuel pellet and related method for fusion energy. More particularly, the present invention provides a fuel pellet capable of a low ignition temperature and minimizing a generation of neutrons from a laser fusion system. Merely by way of example, the invention can be applied to a variety of applications, including energy generation for power, spaceships, travel, other vehicles for air, land, and water, defense applications (e.g., satellite, aerospace, land and missile defense, submarines, boats), biotechnology, chemical, mechanical, electrical, and communication and/or data applications.

The present invention relates to a nuclear fusion fuel target for inertial confinement fusion, wherein a novel configuration of fuel layers is employed. The target design combines one or more favorable properties of different fusion fuels and other materials, such as DT (deuterium-tritium), DLi6 (deuterium-lithium-6), and p- (or H-)11B (proton-boron-11), to achieve low ignition temperatures, minimal neutron generation and high-density compression and introducing novel functionalities into the fusion fuel target for inertial confinement fusion. The innovative target design aims to improve the efficiency and feasibility of nuclear fusion in inertial confinement systems, this patent pertains to an advancement of previously submitted patent ideas.

The disclosed targets feature a novel configuration, where a central fuel material region with the lowest ignition temperature or energy (relative to other fuel materials) is sandwiched by other fuel material regions having higher ignition requirements. This configuration enables the thermonuclear burn-driven implosion to compress the laser-imploding plasmas to further ultra-high density and temperature. Also, the outermost region of the fuel material serves as a neutron/charged particle converter layer, designed to efficiently transform a high kinetic energy of neutrons generated during fusion reactions into a kinetic energy of charged particles. By the converter, a kinetic energy of the neutron flux is transformed into a kinetic energy of charged particle flux, such as hydrogen atoms or low atomic number particles, which collide with neutrons effectively, thereby reducing high-energy neutron emission from the target effectively.

This approach addresses the challenges of conventional ICF targets, offering a more efficient means to achieve fusion ignition while mitigating the adverse effects associated with excessive high energy neutron production. The patent outlines various embodiments, encompassing different fuel material combinations and laser parameters, to maximize the thermonuclear fusion gain/energy efficiency and mitigation of high energy neutron emission from the target. Additionally, the disclosed targets can be configured spherically or with various spatial geometries, allowing flexibility in their application.

This patent represents an advancement in fusion fuel target design, enabling more efficient inertial confinement fusion with less neutron emission which contributes to enhancing the flexibility of the fusion reactor design and longevity, efficient maintenance of the laser fusion reactor system, or less radioactivation of the reactor vessel.

Further details of the present invention can be found throughout the present specification and more particularly below.

A target material has been made by a single material of binary compound such as a D(deuterium)T(tritium), D(deuterium)Li⁶(lithium), P(proton)B¹¹(boron), and others. However, when a single material of binary compound is used as a target, there has been a limitation as mentioned below.

When a single material of DT is a used as target, a high-energy neutron which is harmful for any materials is generated. Also, T(tritium), is a radio-active material. An advantage of the DT has the lowest ignition temperature of 13.6keV. More than 90% of conventional fusion companies and U.S. national laboratories use the DT as a target at present due to the lowest ignition temperature.

When a single material of DLi⁶ is used as a target, medium energy neutrons, T(tritium), protons and other particles are generated. The number and energy of neutrons are much smaller than those of DT. The ignition temperature of DLi⁶ is medium value of 66keV which is much higher than 13.6keV of DT. Due to the higher ignition temperature of DLi⁶, DLi⁶ has not been desired among scientists as a target.

When a single material of pB¹¹ is used as a target, no neutrons are generated. pB¹¹ is the safest target material among all kinds of target materials. However, the pB¹¹ has the highest ignition temperature of 123keV which is much higher than 13.6keV of DT and 66keV of DLi⁶. Due to the highest ignition temperature, pB¹¹ target has not been popular among scientists as a target in spite of the safest material in the view of the environmental issue.

Considering about the advantage of each target material, we have invented a new structure of the target by combining these materials as mentioned below.

List 1 shows various ignition temperatures (T) in Table 1 below.

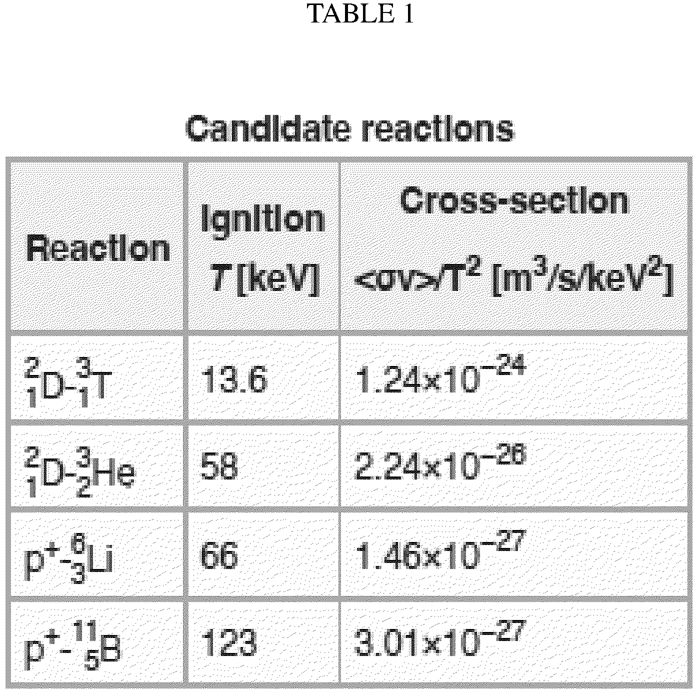

DT has the lowest ignition temperature of 13.6keV. p(H)Li⁶ has the second lowest ignition temperature of 66keV. Then, p(H)B¹¹ has the highest ignition temperature of 123keV. The ignition temperature is basically determined by atomic number. When the atomic number is smaller, the ignition temperature or energy is lower because the amount of charge of protons is smaller. DT reaction with atomic number of Z=1 has the lowest ignition temperature. pB11 with Z=5 has the highest ignition temperature. pLi⁶, pLi⁷. DLi⁶ or DLi⁷ with Z=3 should have the medium ignition temperature.

Further details of the present techniques can be found throughout the present specification and more particularly below.

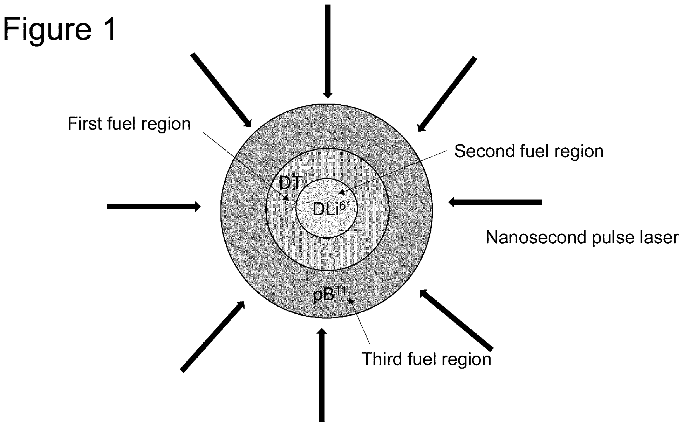

Figure 1 is a simplified diagram illustrating a target used for inertial confinement fusion (ICF) in an example according to the present invention. The target configuration features a layered structure wherein the DT fuel of the first fuel region with the lowest ignition temperature of 13.6keV is sandwiched by DLi⁶ of the second fuel region with the higher ignition temperature of 66keV than the DT and pB¹¹ of the third fuel region with the higher ignition temperature of 123keV than the DT. In this structure of the target, the thermonuclear burn of the first fuel material layer of DT is initiated first by the achievement of the fusion ignition density and temperature with the nanosecond pulsed laser-driven implosion and the ignition because DT of the first fuel region has the lowest ignition temperature when the target is compressed to at least 100 times to 20,000 times (and greater) by the nanosecond pulsed lasers with a pulse width of 1 ns to 40 ns and a total pulse power density of 1 × 10¹³ W/cm² to 1 × 10²⁰ W/cm² on the target, including variations.

Then next, DLi⁶ of the second fuel region is compressed to be a higher density and temperature by the implosion driven by the energy of thermonuclear burn of the DT of the first fuel region. Once the temperature of compressed DLi⁶ of second fuel region is over the ignition criterion of 66 keV, DLi⁶ of second fuel region is ignited and the DLi⁶ thermonuclear burn releases its fusion energy and heats first fuel and second fuel regions to the higher temperature. Then, the p(H)B¹¹ of third fuel region is ignited after the temperature of compressed p(H)B ¹¹ of third fuel region is over the ignition temperature of 123 keV.

The fusion reaction of pB¹¹ generates charged hydrogen atoms and boron atoms which have low atomic numbers, among other by products. These ionized hydrogen atoms and boron atoms collide with neutrons generated from DT and DLi⁶ fusion reactions, and then, the high momentum energy of neutrons is transferred to these charged particles of hydrogen atoms and boron atoms as kinetic energy. Thus, generation of high energy neutrons is reduced or even minimized using this novel target design.

The outermost region of the third fuel region material has a material layer comprising hydrogen atoms or low atomic number atoms, designed as a converter layer, which, upon collision with neutrons generated during fusion reactions, accepts the momentum of neutrons and transfers it into kinetic energy of charged particles such as hydrogen atoms or low atomic number particles that escape outward from the target. For example, instead of pB¹¹, solid hydrogen (H) is used as a converter. In this case, no ignition of H is achieved. The charged hydrogen atoms collide with neutrons, and then the generation of neutrons is reduced or minimized as mentioned above.

Using the present techniques, the ignition temperature is as low as 13.6keV of DT and the generation of the neutrons is minimized through the pB¹¹ as a converter layer. This ignition technique is called a central ignition method which uses the nanosecond pulsed lasers for the implosion and ignition.

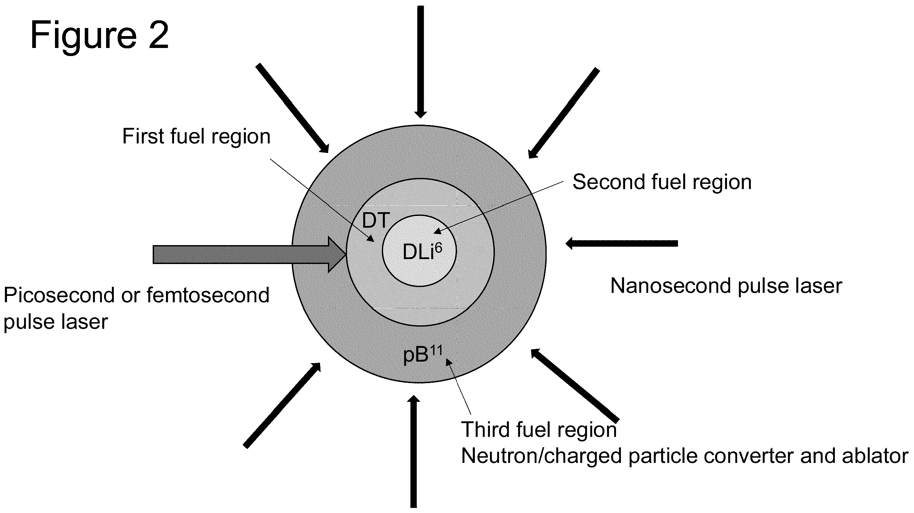

Figure 2 is a simplified illustration of a fast ignition method with an additional picosecond or femtosecond pulse for the ignition according to an example of the present invention. In this case, the target is compressed to at least 100 times to 20,000 times by the nanosecond pulsed lasers with a pulse width of 1 ns to 40 ns and a total pulse power density of 1 × 10¹³ W/cm² to 1 × 10¹⁸ W/cm² on the target. After the compression of the target, the thermonuclear burn of DT of the first fuel material layer is performed by the achievement of a fusion ignition temperature by external heating a compressed plasma with a picosecond or femtosecond laser from the outside of the target as shown, herein a total peak laser power density of 1 × 10¹⁷ W/cm² to 1 × 10²⁴ W/cm² by focusing the laser beam into 10~50 microns on the target. After the ignition of the DT of the first fuel region, DLi⁶ and pB¹¹ are ignited continuously as discussed.

Using the present technique, the ignition temperature is as low as 13.6keV of DT and the generation of the neutrons is minimized through the pB¹¹ as a converter layer as discussed. This ignition method is called a fast ignition method which uses the nanosecond pulsed lasers for the compression and the picosecond or femtosecond pulse for the ignition.

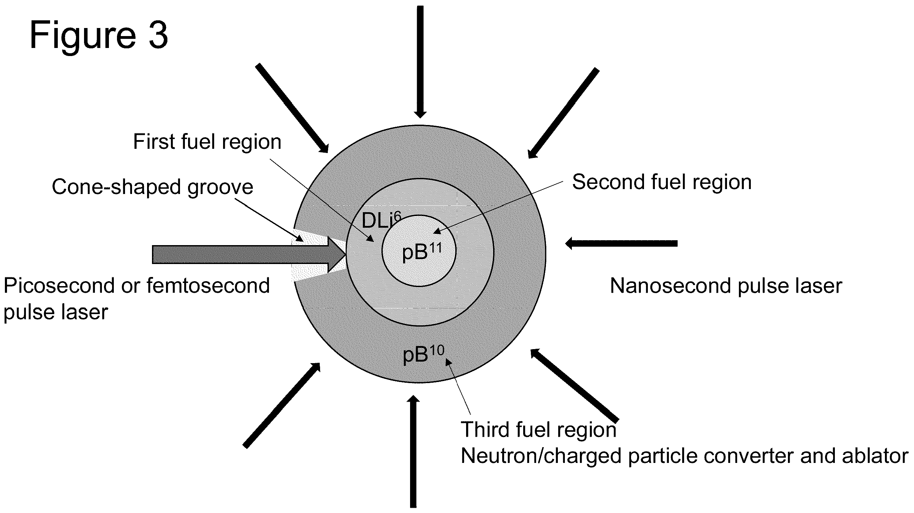

Figure 3 is a simplified diagram illustrating a fast ignition method with an additional picosecond or femtosecond pulse for the ignition according to an example of the present invention. The target configuration features a layered structure wherein the DLi⁶ fuel of the first fuel region with the lowest ignition temperature of 66keV is sandwiched by pB¹¹ of the second fuel region with the higher ignition temperature of 123keV than the DT and pB¹⁰ of the third fuel region with the higher ignition temperature of 123keV than the DT.

In this structure, the target is compressed to at least 100 times to 20,000 times by the nanosecond pulsed lasers with a pulse width of 1 ns to 40 ns and a total pulse power density of 1 × 10¹³ W/cm² to 1 × 10¹⁸ W/cm² on the target. After the compression of the target, the thermonuclear burn of DLi⁶ of the first fuel material layer is performed by the achievement of a fusion ignition temperature by external heating a compressed plasma with a picosecond or femtosecond laser injected through the cone-shaped groove into the DLi⁶ of the first fuel region directly as shown in Figure 3, herein a total peak laser power density of 1 × 10¹⁷ W/cm² to 1 × 10²⁴ W/cm² by focusing the laser beam into 10~50 microns on the cone shape groove. The cone-shaped groove comprises a tip configured within a vicinity or inside of DLi⁶ of the first fuel material region. The outer surface of cone-shaped groove is coated by a metal material with a high Z value such as gold (Au), lead (Pb), titanium (Ti) and other suitable high Z metal materials or these alloys. In this case, the picosecond or femtosecond pulsed laser irradiates the DLi⁶ directly through the cone-shaped groove more effectively than that of Figure 2. In the case of Figure 2, the picosecond or femtosecond pulsed laser irradiates the target from the surface of pB¹¹. Thus, some portion of the laser light could reach the DLi⁶ of the first fuel region due to the absorption and scattering caused by pB¹⁰ of the third fusion region. After the ignition of the DLi⁶ of the first fuel region, DLi⁶ and pB¹⁰ are ignited continuously as mentioned in Figure 1.

Using the present technique, the ignition temperature is as low as 66keV of DLi⁶ and the generation of the neutrons is minimized through the pB¹⁰ as a converter layer as mentioned in Figure1. This ignition method is called a fast ignition method which uses the nanosecond pulsed lasers for the compression and the picosecond or femtosecond pulse for the ignition.

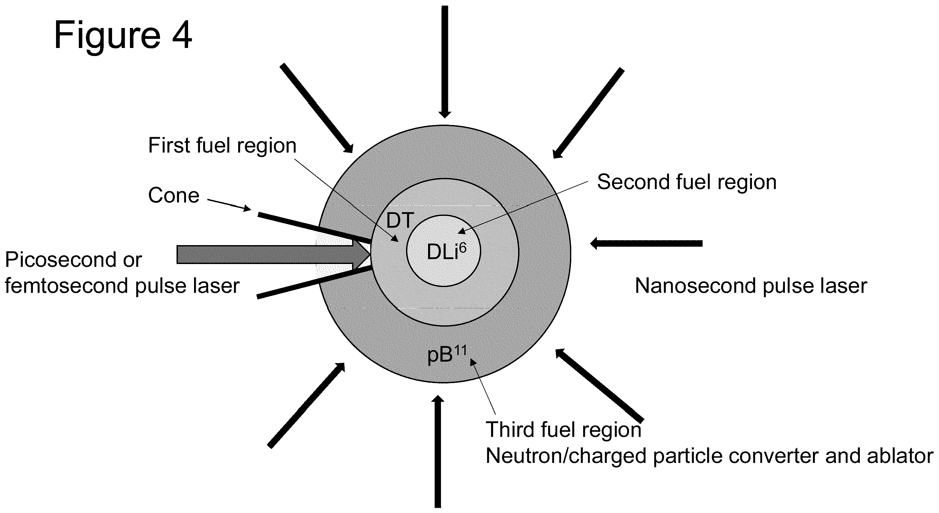

Figure 4 is a simplified diagram illustrating a fast ignition method with an additional picosecond or femtosecond pulse for the ignition using a novel target according to an example of the present invention. The target configuration features a layered structure wherein the DT fuel of the first fuel region with the lowest ignition temperature of 13.6keV is sandwiched by DLi⁶ of the second fuel region with the higher ignition temperature of 66keV than the DT and pB¹¹ of the third fuel region with the higher ignition temperature of 123keV than the DT.

In this structure, the target is compressed at least 100 times to 20,000 times (and greater) by the nanosecond pulsed lasers with a pulse width of 1 ns to 40 ns and a total pulse power density of 1 × 10¹³ W/cm² to 1 × 10¹⁸ W/cm² on the target. After the compression of the target, the thermonuclear burn of DT of the first fuel material layer is performed by the achievement of a fusion ignition temperature by external heating a compressed plasma with a picosecond or femtosecond laser through the cone-shaped groove directly on the DT fuel of the first fuel region as shown in Figure 4, wherein a total peak laser power density of 1 × 10¹⁷ W/cm² to 1 × 10²⁴ W/cm² by focusing into 10~50 microns into the cone shape groove. The cone-shaped groove comprises a tip configured within a vicinity or inside of DT of the first fuel material region. The cone-shaped metal is extended outside of the target in Figure 4. In this case, the picosecond or femtosecond pulsed laser irradiates the DT directly through the cone-shaped groove more effectively than that of Figure 3. In the case of Figure 3, the picosecond or femtosecond pulsed laser irradiate the target through the cone-shaped groove formed on the surface of the target as shown in Figure 3. The surface of the target has a plasma caused by the irradiation of the nanosecond pulsed laser for the compression. Due to the strong plasma on the surface, the picosecond or femtosecond pulsed laser is disturbed to reach the inside of the cone in Figure 3. When the cone is extended outside from the surface of the target as shown in Figure 4, the picosecond or femtosecond pulsed laser could reach to inside of the extended cone without the effect of the plasma on the surface of the target. After the ignition of the DT of the first fuel region, DLi⁶ and pB ¹¹ are ignited continuously as mentioned in Figure 1.

Using the present technique, the ignition temperature is as low as 13.6keV of DT and the generation of the neutrons is minimized through the pB¹¹ as a converter layer as discussed. This ignition method is called as a fast ignition method which use the nanosecond pulsed lasers for the compression and the picosecond or femtosecond pulse for the ignition.

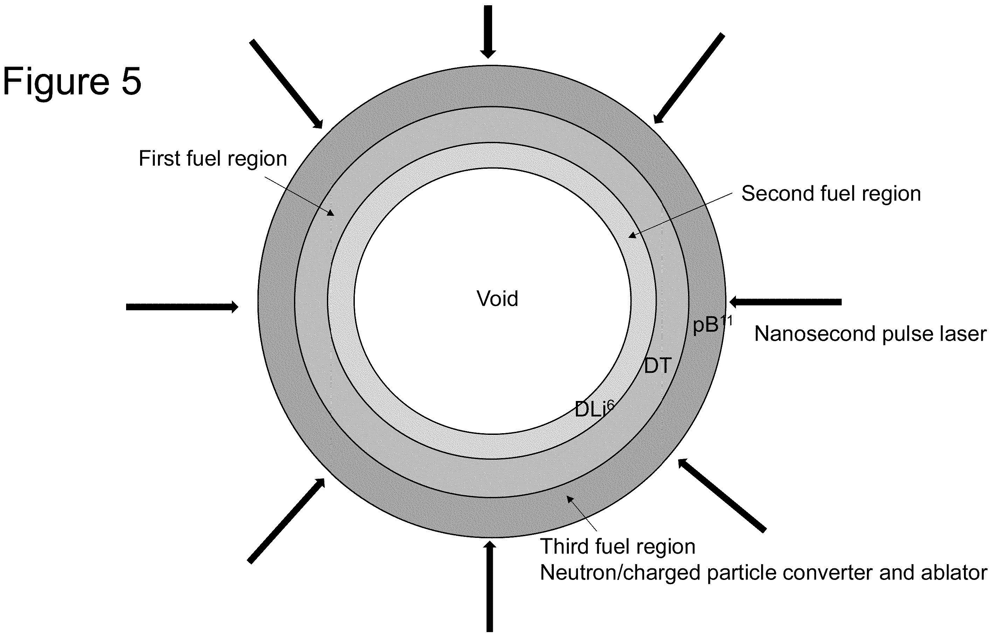

Figure 5 is a simplified diagram illustrating another target used for inertial confinement fusion (ICF) in an example according to the present invention. The target configuration features a layered structure wherein the DT fuel of the first fuel region with the lowest ignition temperature of 13.6keV is sandwiched by DLi⁶ of the second fuel region with the higher ignition temperature of 66keV than the DT and pB¹¹ of the third fuel region with the higher ignition temperature of 123keV than the DT. In the center of the DLi⁶ of the second fuel region, the void is formed like a shell shape in this invention to compress the target to accelerate the plasma of each fuels into the center region with a high kinetic energy. Then, at the center region of the void, the kinetic energy of the plasma becomes an internal energy to form a hot spot and then ignition thereafter. In this structure of the target, the thermonuclear burn of the first fuel material layer of DT is initiated first by the achievement of the fusion ignition density and temperature with the nanosecond pulsed laser-driven implosion and ignition because DT of the first fuel region has the lowest ignition temperature when the target is compressed to at least 100 times to 20,000 times by the nanosecond pulsed lasers with a pulse width of 1 ns to 40 ns and a total pulse power density of 1 × 10¹³ W/cm² to 1 × 10²⁰ W/cm² on the target.

Then next, DLi⁶ of the second fuel region is compressed to implosion and be ignited by the energy of thermonuclear burn of the DT of the first fuel region which is surrounding the DLi6 of the second fuel region to compress the DLi⁶ isotopically by the energy of the ignition of the DT of the first fuel region further. Then, the p(H)B¹¹ of third fuel region is ignited by the energy of thermonuclear burn of the DLi⁶ of the second fuel region.

The fusion reaction of pB¹¹ generates charged hydrogen atoms and boron atoms which have low atomic numbers. These charged hydrogen atoms and boron atoms collide with neutrons generated from DT and DLi⁶ fusion reactions, and then, the high momentum energy of neutrons is transferred to these charged particles of hydrogen atoms and boron atoms as kinetic energy. Thus, the generation of high-energy neutrons is minimized using this novel target design.

The outermost region of the third fuel region material has a material layer comprising hydrogen atoms or low atomic number atoms, designed as a converter layer, which, upon collision with neutrons generated during fusion reactions, accepts the momentum of neutrons and transfers it into kinetic energy of charged particles such as hydrogen atoms or low atomic number particles that escape outward from the target. For example, instead of pB¹¹, solid hydrogen (H) is used as the converter. In this case, no ignition of H is achieved. The charge hydrogen atoms collide with neutrons, and then the generation of neutrons is reduced or minimized as mentioned above.

Using the present technique, the ignition temperature is as low as 13.6keV of DT and the generation of the neutrons is minimized through the pB¹¹ as a converter layer. This ignition method is called as a center ignition method which only use the nanosecond pulsed lasers for the implosion and ignition.

The void of the center of the second fuel region could be used for other fuel materials of the second fuel region to compress the fuel materials easily to accelerate the plasma of each fuel into the center region with a high kinetic energy by using the center ignition or fast ignition methods using nanosecond pulsed lasers. Then, at the center region of the void, the kinetic energy of the plasma becomes an internal energy to form a hot spot and then ignition thereafter.

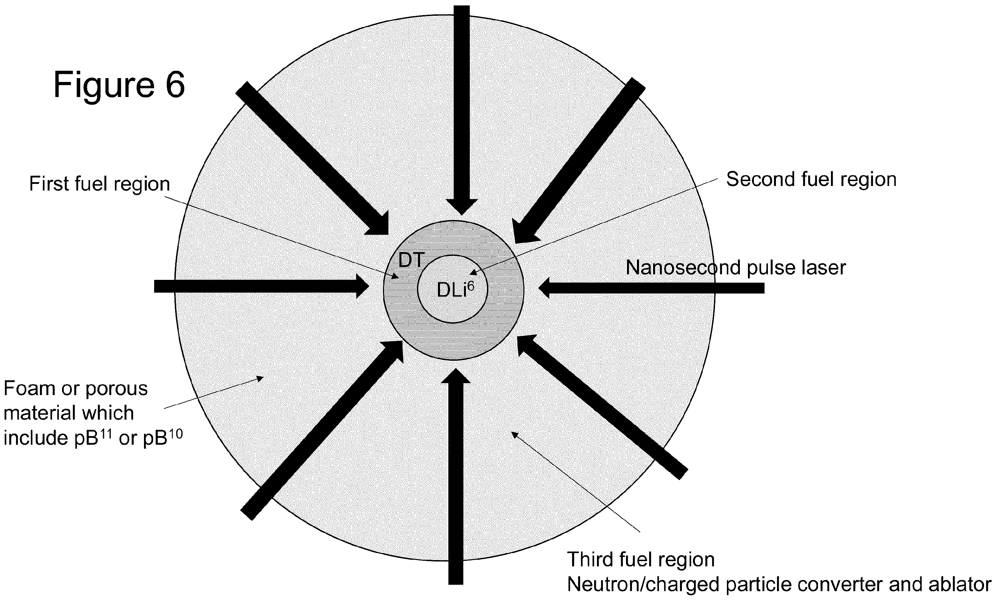

Figure 6 is a simplified diagram illustrating another target used for inertial confinement fusion (ICF) in an example according to the present invention. The target configuration features a layered structure wherein the DT fuel of the first fuel region with the lowest ignition temperature of 13.6keV is sandwiched by DLi⁶ of the second fuel region with the higher ignition temperature of 66keV than the DT and pB¹¹ or pB¹⁰ of the third fuel region with the higher ignition temperature of 123keV than the DT. In this structure of the target, pB¹¹ or pB¹⁰ of the third fuel region is composed of foam or porous structure or included in the foam or porous materials. Nanosecond pulsed lasers are irradiated through the holes of foam or porous structure directly into the DT of the first fuel region after multi-reflection or directly through the holes. Thus, the nanosecond pulsed laser irradiates the DT fuel of the first fuel region effectively in comparison with that of Figure 1. The thermonuclear burn of the first fuel material layer of DT is initiated first by the achievement of the fusion ignition density and temperature with the nanosecond pulsed laser-driven implosion and the ignition because DT of the first fuel region is directly irradiated by lasers and also has the lowest ignition temperature when the target is compressed to at least 100 times to 20,000 times by the nanosecond pulsed lasers with a pulse width of 1 ns to 40 ns and a total pulse power density of 1 × 10¹³ W/cm² to 1 × 10²⁰ W/cm² on the target.

Then next, DLi⁶ of the second fuel region is compressed to implosion and be ignited by the energy of thermonuclear burn of the DT of the first fuel region which is surrounding the DLi⁶ of the second fuel region to compress the DLi⁶ isotopically by the energy of the ignition of the DT of the first fuel region further. Then, the p(H)B¹¹ or pB¹⁰of third fuel region is ignited by the energy of thermonuclear burn of the DLi⁶ of the second fuel region.

The fusion reaction of pB¹¹ or pB¹⁰ composed of foam or porous structure or included in the foam or porous materials generates charged hydrogen atoms and boron atoms which have low atomic numbers. These charged hydrogen atoms and boron atoms collide with neutrons generated from DT and DLi⁶ fusion reactions, and then, the high momentum energy of neutrons is transferred to these charged particles of hydrogen atoms and boron atoms as a kinetic energy. Thus, the generation of high energy neutrons is minimized using this novel target design.

The outermost region of the third fuel region material consists of a material layer comprising hydrogen atoms or low atomic number after ignition, designed as a converter layer, which, upon collision with neutrons generated during fusion reactions, accepts the momentum of neutrons and transfers it into kinetic energy of charged particles such as hydrogen atoms or low atomic number particles that escape outward from the target. For examples, instead of pB¹¹ or pB¹⁰, solid hydrogen (H) is used as converter. In this case, no ignition of H is achieved. The charged hydrogen atoms collide with neutrons, and then the generation of neutrons is reduced or minimized as mentioned above.

Using the present technique, the ignition temperature is as low as 13.6keV of DT and the generation of the neutrons is reduced or minimized through the pB¹¹or pB¹⁰ as a converter layer. This ignition method is called as a center ignition method which only use the nanosecond pulsed lasers for the implosion and ignition.

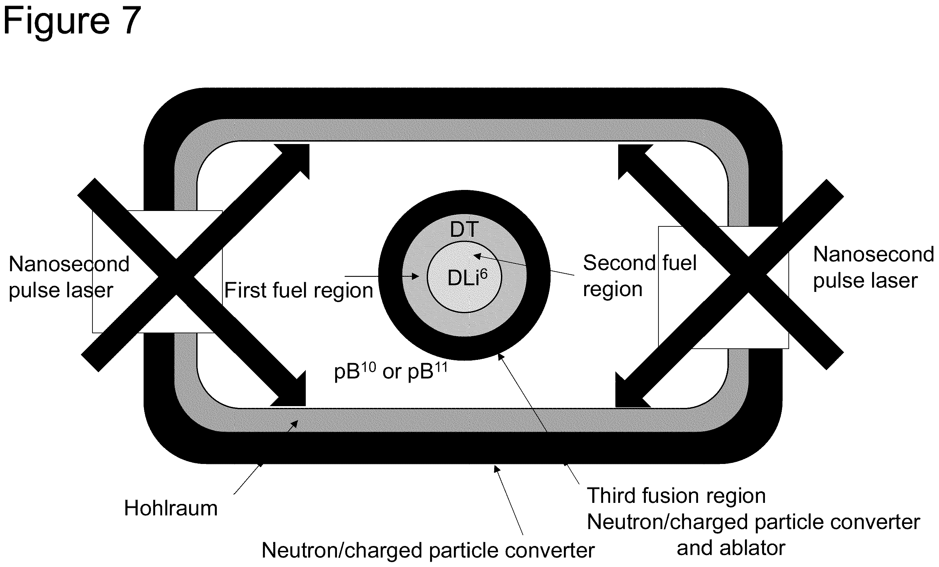

Figure 7 is a simplified diagram illustrating an indirect ignition using a hohlraum according to an example of the present invention. In an example, the target used in Figure 1 is placed inside of the cylindrical-shaped hohlraum and then, through both sides of windows of the cylindrical-shaped hohlraum, the nanosecond pulsed lasers with a pulse width of 1 ns to 40 ns and a total pulse energy of 1~10 megajoule is irradiated into the surface of the inside of the hohlraum to generate X-rays. Then X-rays irradiate into the target for the ignition of the target where DT of the first fuel region is ignited first and then, DLi⁶ and pB¹¹ are ignited continuously as mentioned in Figure 1.

Also, the pB¹¹, PB¹⁰ or a material which include at least pB¹¹ or PB¹⁰ is coated on the surface of outside of the hohlraum to reduce or stop high energy neutrons to pass through the hohlraum. The pB¹¹ or PB¹⁰ fuel of the third fuel region works as a converter layer, which upon collision with neutrons generated during fusion reactions, accepts the momentum energy of neutrons and transfers it into kinetic energy of charged particles such as that escape outward from the target as mentioned in Figure 1.

Also, the pB¹¹, PB¹⁰, or material which includes at least pB¹¹ or PB¹⁰ is coated on the surface of outside of the hohlraum to work as shielding the high energy neutrons from going outside of the hohlraum. Thus, using the coated hohlraum, the number of neutrons generated by the ignition of DT and DLi⁶ is reduced further.

Using the present techniques from Figure 1 to Figure 7 mentioned above, the ignition temperature is as low as 13.6keV and the number of generated neutrons due to the DT ignition is reduced using the PB¹¹ or pB¹⁰ converter. Using the PB¹¹ or pB¹⁰ coated hohlraum, the number of generated neutrons is reduced further.

In above present inventions, picosecond pulse laser source means the laser source has a pulse width from 1 picosecond to 900 picoseconds. Nanosecond pulse laser source means the laser source has a pulse width from 1 nanosecond to 40 nanoseconds. Femtosecond pulse laser source means the laser source has a pulse width from 10 femtoseconds to 1000 femtoseconds. The wavelength of nanosecond, picosecond and femtosecond laser sources are from UV (340 nm) to IR (1080 nm).

In an example, the picosecond laser light sources outputs a picosecond pulse focused to the target device configured with a laser power uniformity of a wavefront using one or more deformable mirrors or a cavity device. In an example, nanosecond laser light sources and the picosecond laser light sources emit, respectively a plurality of nanosecond pulses and a plurality of picosecond pulses configured to focus to the target using one or more concave mirrors or lens. In an example, at least one of the nanosecond pulse laser light sources has a different emission wavelength, phase, or both of the wavelength and phase from one or more of the others nanosecond pulse laser light sources.

In an example, each of nanosecond pulse laser light sources has a different emission wavelength, phase or both of the wavelength and the phase from any other nanosecond pulse laser light source to achieve a desired non-coherency or minimized interference effects near a vicinity of a center of a cavity or a reactor, the Fabry-Perot cavity being a plurality of Fabry-Perot cavities configured to form a hub and spoke configuration intersecting at the center of the reactor. In an example, at least one of the pluralities of Fabry-Perot cavities have a different cavity length from one or more of the other Fabry-Perot cavities. In an example, each of Fabry-Perot cavities has a different cavity length.

In an example, the present invention provides a fusion fuel target device for inertial confinement fusion (ICF). The device has a first fuel material region characterized by a first ignition temperature, the first fuel material region and a second fuel material region coupled to the first fuel material region. The device has a third fuel material region configured such that the first fuel material region being sandwiched between the second fuel material region and the third material fuel region. In an example, the second fuel material is configured within a center region and has a higher ignition temperature than the first fuel material region. In an example, the third fuel material region is an outer region and having a higher ignition temperature than the first fuel material region.

In an example, the third fuel material region comprises a converter layer which upon a collision with neutrons generated during a fusion reaction, accepts a momentum energy of neutrons and transfers the momentum energy into a kinetic energy of charged particles such that the charged particles escape outwardly from the center region. In an example, the first fuel material region is configured for an ignition before the second fuel material region or the third fuel material region. In an example, the third material fuel region is characterized by both a converter and a thermonuclear burn. In an example, the third fuel material region is surrounded by an ablation material that serves to absorb an incident laser energy and ablate outwardly to drive an implosion. In an example, the third fuel material region is characterized as both a converter and an ablator. In an example, the first fuel material region includes at least one of a D (deuterium) T (tritium), a DHe³, a DD, or a DLi⁶ (deuterium-lithium-6), or a DLi⁷ (deuterium-lithium-7). In an example, the second fuel material region includes at least one of a DHe³, a DLi⁶ (deuterium-lithium-6), a DLi⁷ (deuterium-lithium-7), a H(hydrogen)Li⁶, a HLi⁷, a pB¹¹ or a PB¹⁰. In an example, the third fuel material region includes at least one of a P (or H)B¹¹ or a pB¹⁰. In an example, the third fuel material region includes at least one of a (hydrogen)H, P (or H)-B¹¹ or pB¹⁰, or low atomic number particles.

In an example, the device is subjected to a plurality of nanosecond pulse lasers with a pulse width of 1 ns to 40 ns and a total pulse power density of 1 × 10¹³ W/cm² to 1 × 10²⁰ W/cm² irradiated on the device, compressing the device to at least 100 times to 20,000 times at concurrent with a thermonuclear burn initiated in the first fuel material region.

In an example, the device is characterized by a thermonuclear burn of the first fuel material region initiated by a picosecond or femtosecond laser from an outside of the device having a total peak laser power density of 1 × 10¹⁷ W/cm² to 1 × 10²⁴ W/cm² on the device while a nanosecond pulse laser with a pulse width of 1 ns to 40 ns and a total pulse power density of 1 × 10¹³ W/cm² to 1 × 10¹⁸ W/cm² irradiated on the device.

In an example, the device has other variations. The device has a cone-shaped groove configured within the device. In an example, the cone-shaped groove comprising a tip configured within a vicinity or inside of the first fuel material region. In an example, the cone-shaped groove comprises an outer surface, the outer surface coated by a metal material with a high Z value, the metal material being at least one of a gold (Au), a lead (Pb) and other suitable high Z metal materials. In an example, the picosecond or femtosecond laser is irradiated through a cone shaped groove configured into the device. In an example, the picosecond laser is configured to focus to a laser spot size of 5 microns∼ 50 microns on a groove configured on the device. In an example, the device is spherical in shape with a diameter of 1 mm to 10 mm.

In an example, the device has a different material from any of the first fuel material region, second fuel material region, or third fuel material region (collectively the fuel material regions) is configured between at least a pair of the fuel material regions or between any one of the fuel material regions and an ablation material. In an example, a void is formed at a center region of the second fuel region.

In an alternative example, the present invention provides a spherical-shaped target device for inertial fusion. The device has a plurality of multi-layered fuels and an outer most fuel layer is composed of a pB¹¹, pB¹⁰ or a material which include at least pB¹¹ or pB¹⁰.

In an example, the multi layered fuel is composed of two or three different fuel material layers in an example. The device also has a cone-shaped groove comprising a tip configured within a vicinity or inside of a DT fuel layer or region configured within one of the plurality of multi-layered fuels. In an example, one of the plurality of multi-layered fuels comprises a DT configured as a first ignition fuel material. In an example, the device is placed inside of a cylindrical shaped hohlraum. In an example, the pB¹¹, PB¹⁰ or a material which include at least pB¹¹ or PB¹⁰ is coated on a surface of outside of the hohlraum. In an example, the hohlraum is subjected to a plurality of nanosecond pulsed lasers with a pulse width of 1 ns to 40 ns and a total pulse energy of 1~10 megajoule irradiated into a surface of an interior region of the hohlraum to generate X-rays through one or more sides of one or more opening windows of the hohlraum causing a plurality of X-rays to irradiate the device for ignition of the device.

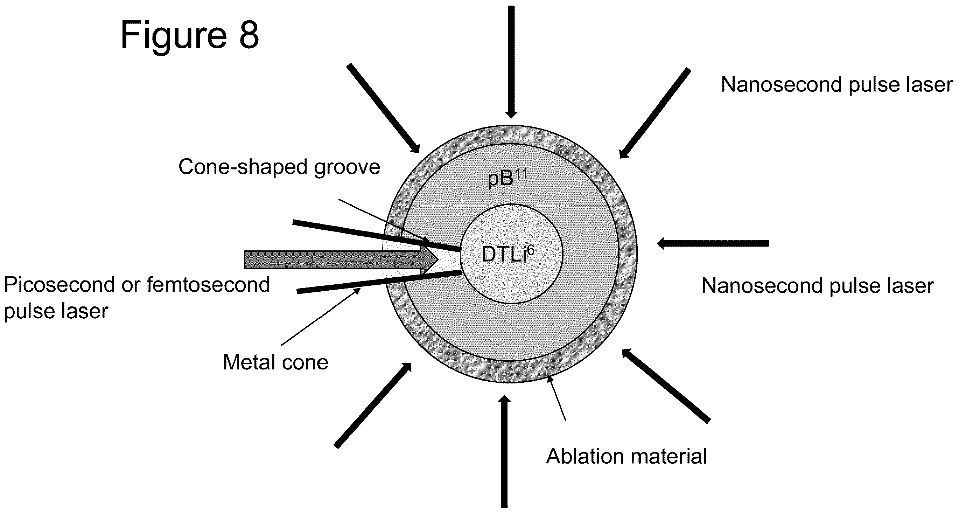

Figure 8 is a simplified diagram illustrating a target used for inertial confinement fusion (ICF) according to an example of the present invention. As shown, D(deuterium)T(tritium)Li6 or DTLi⁷ fuel is the first fuel at the center region of the target. Here, a part of D of DL⁶ or DLi⁷ is replaced with T. By surrounding the DT, there is a second fuel of p(proton or H(hydrogen))B¹¹(boron) fuel. DTLi⁶ or DTLi⁷ is a solid at room temperature. The ignition temperature of DTLi⁶ or DTLi⁷ is lower than that of DL⁶ or DLi⁷ because DTLi⁶ or DTLi⁷ is considered to be a mixture of DT and DLi6 or DLi⁷. Thus, the ignition temperature of DTLi⁶ or DTLi⁷ is considered to be between 13.6kV of DT and 66keV of DLi⁶. Also, target gain of DTLi⁶ or DTLi⁷ is considered to be higher than that of that of DL⁶ or DLi⁷ because DTLi⁶ or DTLi⁷ is considered to be a mixture of DT and DLi6 or DLi⁷. The outermost material is the ablation material. A cone-shaped groove or metal cone is formed on a target. The tip of the cone-shaped groove or metal cone is located near or inside of the first fuel material of DTLi⁶ or DTLi⁷. The nanosecond pulse with the pulse width of 1ns∼40ns and the total pulse power density of 1×10¹³W/cm²~1×10¹⁸W/cm² is irradiated into the target and then the target is compressed at least 100 times to 20,000 times or greater by the laser ablation.

In an example, a picosecond or femtosecond laser light sources outputs a picosecond or femtosecond pulse focused to the cone-shaped groove on the target with a total peak pulsed power density of 1×10¹⁸W/cm²~1×10²⁴W/cm². The picosecond laser light sources focus on a small laser spot size of 5microns~ 50 microns on the groove. The target has a diameter of 1mm ~ 9mm with a sphere or cylindrical shape. Thus, the size of the cone-shaped groove is almost the same size or a little bit larger than that of the laser spot size. The high intensity picosecond or femtosecond laser light sources irradiate and ignite the DTLi⁶ or DTLi⁷ directly and effectively through the groove with the lower ignition temperature between 13.6keV and 66keV. When there is no groove in the target, the high intensity picosecond or femtosecond laser light cannot ignite the DTLi⁶ or DTLi⁷ effectively by the second fuel of pB¹¹ preventing the high intensity picosecond or femtosecond laser light to reach to the first fuel of DTLi⁶ or DTLi⁷. Then, the DT Li⁶ or DTLi⁷ ignition generates high energy charged particles and high energy neutrons as a plasma.

Next, the high energy charged particles and high energy neutrons caused by the DTLi⁶ or DTLi⁷ ignition are used to ignite the second fuel of pB¹¹ which is surrounding the DTLi⁶ or DTLi⁷.

Then, through the pB¹¹ ignition reaction, p is collided with high energy neutrons effectively and the momentum energy is transferred from the high energy neutrons to protons. After the high energy neutrons losing the energy, low energy neutrons are absorbed by charged boron (B). Then, the generation of neutrons is reduced or even minimized using the novel target. By using the present invention, the ignition temperature is as low as between 13.6keV and 66keV, and the generation of neutrons is reduced or even minimized. The 13.6keV-66keV DTLi⁶ or DTLi⁷ of ignition temperature is much smaller than 123keV of pB¹¹ when the pB¹¹ is ignited by lasers directly.

In an example, an outermost material of the target is the ablation material which is irradiated by high power density nanosecond lasers and the target is compressed inner direction strongly. The ablation material can include, but is not limited to, Al (28N/MW), POM polymer (125N/MW), Taw (31N/MW) and Au. The ablation material of Delrin^{®} (POM, a polymer, 125N/MW) is the preferred target because of highest value of Newton per Megawatt. Also, Al, TaW and Au metals are desirable. When the outside elastic material is a polymer such as perylene, polystyrene and PVA, the elastic material itself works as an ablation material. In an example, laser ablation operates, preferably in vacuum, by inducing a jet of vapor and plasma from the ablation material using a high intensity nanosecond laser pulse. If a sufficiently intense pulsed laser beam hits an ablation material of the surface of the target, it makes a high-temperature jet. Momentum is mass times velocity to the inner direction of the target.

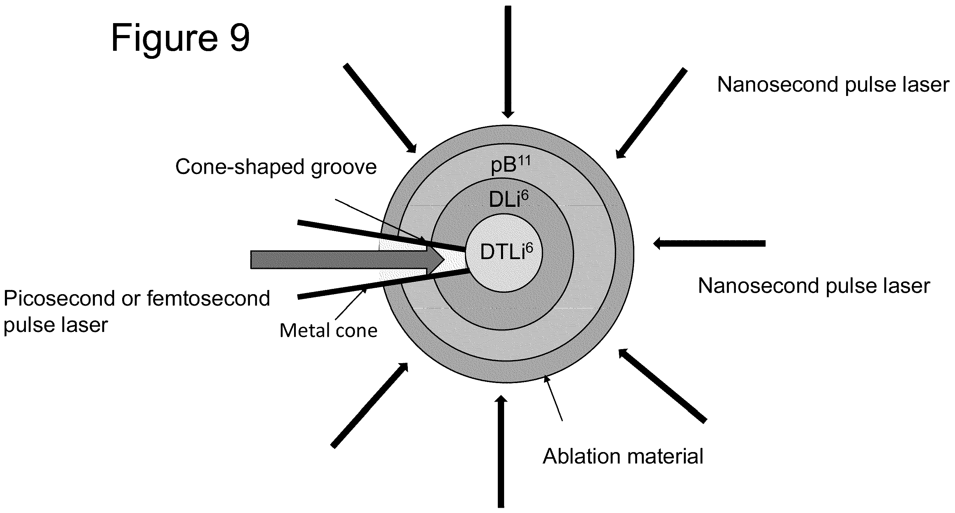

Figure 9 is a simplified diagram illustrating another target for inertial confinement fusion (ICF) according to an example of the present invention. D(deuterium)T(tritium)Li⁶ or DTLi⁷ fuel is the first fuel at the center region of the target. By surrounding the first fuel of DTLi⁶ or DTLi⁷, the target has a second fuel of DLi⁶ fuel and, then a third fuel of pB¹¹. An outermost material is the ablation material. A cone-shaped groove is formed on a target. The tip of the cone-shaped groove is located near or inside of the first fuel material of DTLi⁶ or DTLi⁷. The nanosecond pulse with the pulse width of 1ns∼40ns and the total pulse power density of 1×10¹³W/cm²∼1×10¹⁸W/cm² is irradiated into the target and then the target is compressed at least 100 times to 20,000 times by the laser ablation.

In an example, picosecond or femtosecond laser light sources outputs a picosecond or femtosecond pulse focused to the cone-shaped groove on the target with a total peak pulsed power density of 1×10¹⁷W/cm²∼1×10²⁴W/cm². The picosecond laser light sources focus on a small laser spot size of 5microns~ 50 microns on the groove. The target has a diameter of 1mm ~ 9mm with a sphere shape. Thus, the size of the cone-shaped groove is almost the same size or a little bit larger than that of the laser spot size. The high intensity picosecond or femtosecond laser light sources irradiate and ignite the DTLi⁶ or DTLi⁷ directly and effectively through the groove with the low ignition temperature between 13.6keV and 66keV as mentioned in Figure 1. When there is no groove in the target, the high intensity picosecond or femtosecond laser light cannot ignite the DTLi⁶ or DTLi⁷ effectively by the second and third fuel of DLi⁶ and pB¹¹ preventing the high intensity picosecond or femtosecond laser light to reach to the first fuel of DTLi⁶ or DTLi⁷. Then, the DTLi⁶ or DTLi⁷ ignition at temperature bewteen13.6keV and 66keV generates high energy charged particles and high energy neutrons as a plasma.

Next, the high-energy charged particles and high energy neutrons caused by the DTLi⁶ or DTLi⁷ ignition are used to ignite the second fuel of DLi⁶ which is surrounding the DTLi⁶ or DTLi⁷ at the ignition temperature of 66keV. Next, the high-energy charged particles, neutrons and other particles caused by the ignition reaction of DLi⁶ are used to ignite the third fuel of pB¹¹ which is surrounding the DLi⁶, at the ignition temperature of 123keV.

Then, through the pB¹¹ ignition reaction, p is collided with high energy neutrons effectively and the momentum energy is transferred from the high energy neutrons to protons. After the high energy neutrons losing the energy, low energy neutrons are absorbed by charged boron (B). Then, the generation of neutrons is minimized using the present invention of novel target. By using the present invention, the ignition temperature is as low as between 13.6keV and 66keV, and the generation of neutrons is reduced or even minimized. The 13.6keV-66keV DTLi⁶ or DTLi⁷ of ignition temperature is much smaller than 123keV of pB¹¹ when the pB¹¹ is ignited by lasers directly.

According to the present inventions, novel targets of Figures 8 and 9 are composed of materials which are solid at room temperature. Any and all of materials of DTLi⁶, DTLi⁷, DLi⁶ and pB¹¹ are solid at room temperature. According to the present invention, novel targets are not required to be cooled to cryogenic temperature to solidify DT. Also, cost of the materials is much lower and efficient than that of DT. Thus, using the present novel target, the cost of target is reduced dramatically in comparison with that of DT target of $0.5 million, in an example.

Above descriptions of the Figures, when any type of material is inserted between each fusion material region or between fusion material region and/or an ablation material, the present techniques are not changed but are varied.

Above descriptions of the Figures, any and all timing between irradiation of picosecond or femtosecond laser light source and the nanosecond pulse laser light source is: picosecond or femtosecond laser light sources outputs a picosecond or femtosecond pulse focused to the cone-shaped groove on the target with a total peak pulsed power density of 1×10¹⁷W/cm²∼1×10²⁴W/cm² while nanosecond pulse with the pulse width of 1ns~40ns and the total pulse peak power density of 1×10¹³W/cm²∼1×10¹⁸W/cm² is irradiated into the target and then the target is compressed at least 100 times to 20,000 times by the laser ablation.

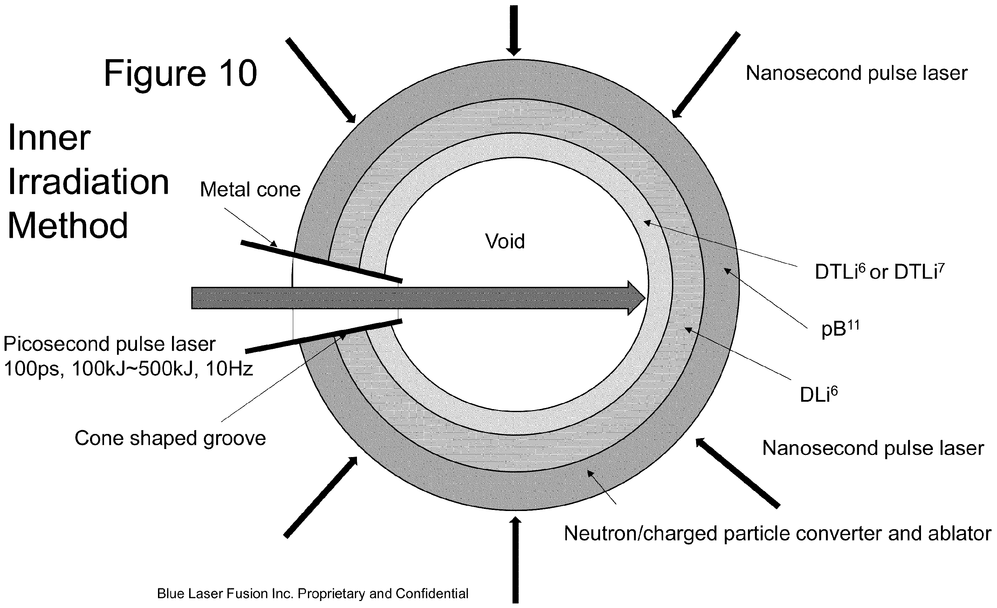

According to the present invention, we employ a shell composed of fusion fuel and an ablator, with external laser entrance holes provided in the shell, as illustrated in Figure 3. The target can be any common target used in inertial confinement fusion, regardless of indirect or direct irradiation. As an initial target shape, any target with a hollow structure at the target center is suitable for our invention. More preferably, we use targets with a multilayer structure composed of DTLi⁶ or DTLi⁷, DLi⁶, DLi7 and pB¹¹, among others. These targets can be used with the introduction of external lasers into the void through laser entrance holes in the shell, as well as with the attachment of a cone target made of high atomic number materials or their compounds, such as gold, lead, and titanium, as shown in Figure 10, to protect the laser injection against the interference of the imploding plasma.

In our present techniques of Figure 10, we introduce heating lasers into the void within the fuel target during the process of implosion through laser injection holes provided in the target from the external source. The timing of heating laser injection coincides with the timing of maximum or near maximum implosion velocity when the void still exists at the center of the implosion acceleration phase.

By introducing external heating lasers into the void at this critical timing, the inner surface of the shell during implosion gets heated and ablates toward the center of the void. The ejected plasma collides at the central region, forming a high-temperature hot spark. It is from this point that the implosion deceleration phase begins. The laser energy supplied from the external source passes through the kinetic energy of the ablated plasma, eventually becoming the internal energy of the high-temperature hot spark. Consequently, this approach efficiently delivers the energy required for hot spark formation, which is essential for nuclear fusion ignition, from an external source to the hot spark. This is a unique feature not found in conventional central ignition or fast ignition methods.

Due to this highly efficient external energy delivery to the hot spark from the outside, it becomes possible to form the hot spark with a smaller amount of total laser energy compared to central ignition or fast ignition methods. This enables the ignition and combustion of nuclear fusion with less laser energy requirements. This technique is called as inner irradiation method.

Furthermore, inner irradiation method addresses the most significant challenge in inertial confinement fusion, which is the inhibition of hot spark formation instability due to Rayleigh-Taylor instability during the implosion deceleration phase. In this phase, the hot spark formed at the center decelerates the imploding motion of the surrounding imploding fuel. In this situation, the Rayleigh-Taylor instability can potentially occur at the interface between the hot spark and the surrounding imploding fuel, which is the main fuel layer.

Furthermore, the heating lasers used in the present technique do not require ultra-high-intensity lasers with femtosecond (fs) or sub-10-picosecond (ps) pulses, as typically used in conventional fast ignition techniques. Instead, we can utilize relatively longer pulses on the order of 100 picoseconds (ps), which is given by that the radius of the void is divided by the ablation velocity of the inner surface of the heated shell. In contrast to conventional fast ignition, which necessitated heating within the time frame determined by the inertia of the high-density plasma until its collapse, in our approach, it suffices to introduce the heating lasers internally while the void exists, and the duration of the void's existence can be extended to the level of several hundred picoseconds through controlled implosion. Pulses in the order of 100 ps can be generated using conventional nanosecond laser techniques without the need for ultra-high-intensity laser technologies like those represented by CPA (Chirped Pulse Amplification).

Figure 10 shows the example of the present invention using a novel target and an inner irradiation method. The target has a relatively large void at the center region of the target which void size is determined by the picosecond pulse width. When the picosecond pulse width is smaller, the void size is smaller. Most inner fuel is D(deuterium)T(tritium)Li⁶ or DTLi⁷ as the first fuel. By surrounding the first fuel of DTLi⁶ or DTLi⁷, there is a second fuel of DLi⁶ fuel and, then a third fuel of pB¹¹. The outermost material is the ablation material which is not shown in the figure. Alternatively, pB¹¹ can function as an ablator without an ablator layer. A cone-shaped groove and metal cone is formed on a target. The tip of the metal cone is located near or inside of the first fuel material of DTLi⁶ or DTLi⁷. The nanosecond pulse with the pulse width of 1ns∼40ns and the total pulse power density of 1×10¹³W/cm²∼1×10¹⁸W/cm² is irradiated into the target and then the target is compressed at least 100 times to 20,000 times by the laser ablation.

The picosecond laser light sources outputs a picosecond pulse focused to the cone-shaped groove on the target with a total peak pulse energy of 100kJ~1MJ and a pulse width 50ps~900ps. cm². The picosecond laser light sources focus on a small laser spot size of 5microns~ 50 microns on the cone. The target has a diameter of 1mm ~ 9mm with a sphere or cylindrical shape. Thus, the size of the cone-shaped groove or metal cone is almost the same size or a little bit larger than that of the laser spot size. The high intensity picosecond laser light sources irradiate and ignite the DTLi⁶ or DTLi⁷ directly and effectively through the metal cone, groove and void into the inner wall of DTLi⁶ or DTLi⁷ directly with the low ignition temperature between 13.6keV and 66keV as mentioned in Figure 2. Then, the DTLi⁶ or DTLi⁷ ignition at temperature bewteen13.6keV and 66keV generates high energy charged particles and high energy neutrons as a plasma.

Next, the high-energy charged particles and high energy neutrons caused by the DTLi⁶ or DTLi⁷ ignition are used to ignite the second fuel of DLi⁶ which is surrounding the DTLi⁶ or DTLi⁷ at the ignition temperature of 66keV. Next, these high-energy charged particles, neutrons and other particles caused by the ignition reaction of DLi⁶ are used to ignite the third fuel of pB¹¹ which is surrounding the DLi⁶, at the ignition temperature of 123keV as mentioned in the above Figure.

Then, through the pB¹¹ ignition reaction, p is collided with high energy neutrons effectively and the momentum energy is transferred from the high energy neutrons to protons. Then, the generation of neutrons is minimized using the present invention of novel target. By using the present invention, the ignition temperature is as low as between 13.6keV and 66keV, and the generation of neutrons is minimized. The 13.6keV-66keV DTLi⁶ or DTLi⁷ of ignition temperature is much smaller than 123keV of pB¹¹ when the pB¹¹ is ignited by lasers directly.

In an example, the novel targets of Figure 10 are composed of materials which are solid at room temperature. All of materials of DTLi⁶, DTLi⁷ , DLi⁶ and pB¹¹ are solid at room temperature. The novel target is not required to cool to be at a cryogenic temperature to make a solid DT. Also, cost of these materials is much less than that of DT. Thus, using the present novel target, the cost of target is reduced dramatically in comparison with that of DT target of $0.5M in an example.

Above techniques of Figure 10 when any type of material is inserted between each fusion material region or between fusion material region and/or ablation material do not change of scope of the present claims.

Above techniques of Figure 10, a timing between irradiation of picosecond laser light source and the nanosecond pulse laser light source indicates picosecond laser light sources outputs a picosecond pulse focused to the metal cone on the target with a total peak pulse energy of 100kJ~1MJ while nanosecond pulse with the pulse width of 1ns~40ns and the total pulse peak power density of 1×10¹³W/cm²∼1×10¹⁸W/cm² is irradiated into the target and then the target is compressed at least 100 times to 20,000 times by the laser ablation, although there can be variations.

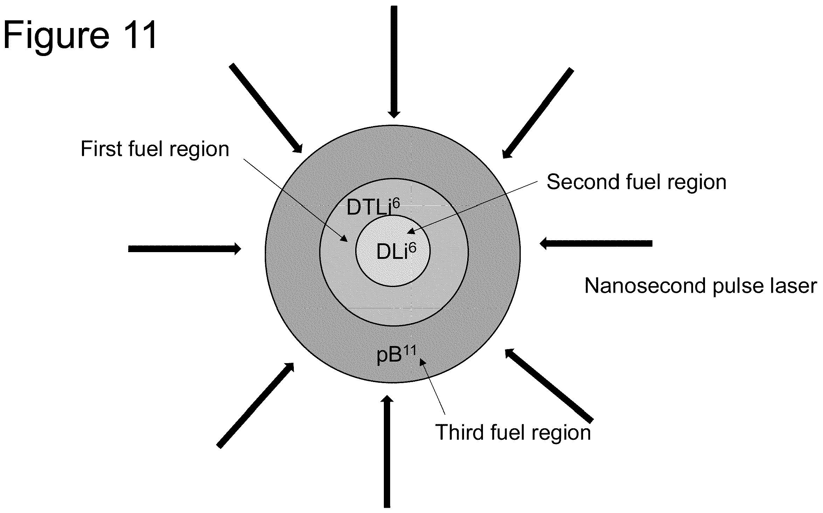

In an example of Figure 11, the present invention provides a fusion fuel target device for inertial confinement fusion (ICF). The device has a first fuel material region characterized by a first ignition temperature, the first fuel material region and a second fuel material region coupled to the first fuel material region. The device has a third fuel material region configured such that the first fuel material region being sandwiched between the second fuel material region and the third material fuel region. In an example, the second fuel material is configured within a center region and has a higher ignition temperature than the first fuel material region. In an example, the third fuel material region is an outer region and having a higher ignition temperature than the first fuel material region.

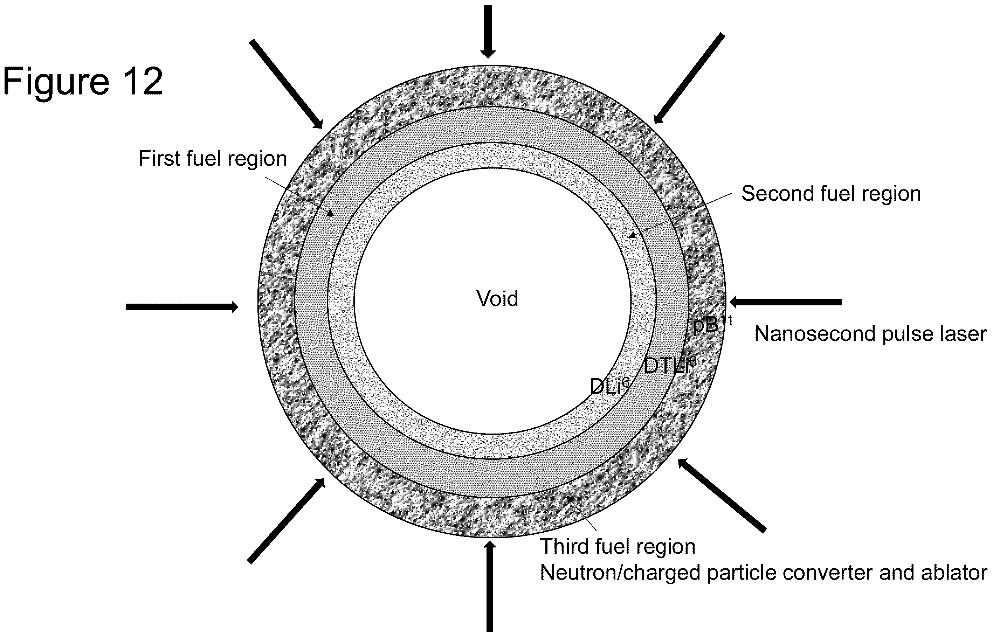

In an example of Figure 12, the third fuel material region comprises a converter layer which upon a collision with neutrons generated during a fusion reaction, accepts a momentum energy of neutrons and transfers the momentum energy into a kinetic energy of charged particles such that the charged particles escape outwardly from the center region. In an example, the first fuel material region is configured for an ignition before the second fuel material region or the third fuel material region. In an example, the third material fuel region is characterized by both a converter and a thermonuclear burn. In an example, the third fuel material region is surrounded by an ablation material that serves to absorb an incident laser energy and ablate outwardly to drive an implosion. In an example, the third fuel material region is characterized as both a converter and an ablator. In an example, the first fuel material region includes at least one of a D (deuterium) T (tritium)Li(lithium)⁶ or DTLi⁷. In an example, the second fuel material region includes at least one of a DLi⁶ (deuterium-lithium-6) or a DLi⁷ (deuterium-lithium-7. In an example, the third fuel material region includes at least one of a (hydrogen)H, p (or H)B¹¹ or pB¹⁰, or low atomic number particles.

In an example of Figure 11, the device is subjected to a plurality of nanosecond pulse lasers with a pulse width of 1 ns to 40 ns and a total pulse power density of 1 × 10¹³ W/cm² to 1 × 10²⁰ W/cm² irradiated on the device, compressing the device to at least 100 times to 20,000 times at concurrent with a thermonuclear burn initiated in the first fuel material region.

In an example, the device is characterized by a thermonuclear burn of the first fuel material region initiated by a picosecond or femtosecond laser from an outside of the device having a total peak laser power density of 1 × 10¹⁷ W/cm² to 1 × 10²⁴ W/cm² on the device while a nanosecond pulse laser with a pulse width of 1 ns to 40 ns and a total pulse power density of 1 × 10¹³ W/cm² to 1 × 10¹⁸ W/cm² irradiated on the device.

In an example, the device has other variations. The device has a cone-shaped groove configured within the device. In an example, the cone-shaped groove comprising a tip configured within a vicinity or inside of the first fuel material region. In an example, the cone-shaped groove comprises an outer surface, the outer surface coated by a metal material with a high Z value, the metal material being at least one of a gold (Au), a lead (Pb) and other suitable high Z metal materials. In an example, the picosecond or femtosecond laser is irradiated through a cone shaped groove configured into the device. In an example, the picosecond laser is configured to focus to a laser spot size of 5 microns∼ 50 microns on a groove configured on the device. In an example, the device is spherical in shape with a diameter of 1 mm to 10 mm.

In an example, the device has a different material from any of the first fuel material region, second fuel material region, or third fuel material region (collectively the fuel material regions) is configured between at least a pair of the fuel material regions or between any one of the fuel material regions and an ablation material. In an example, a void is formed at a center region of the second fuel region.

In an alternative example, the present invention provides a spherical-shaped target device for inertial fusion. The device has a plurality of multi-layered fuels and an outer most fuel layer is composed of a pB¹¹, pB¹⁰ or a material which include at least pB¹¹ or pB¹⁰.

In an example, the multi layered fuel is composed of two or three different fuel material layers in an example. The device also has a cone-shaped groove comprising a tip configured within a vicinity or inside of a DTLi⁶ or DT Li⁷ fuel layer or region configured within one of the plurality of multi-layered fuels. In an example, one of the plurality of multi-layered fuels comprises a DTLi⁶ or DT Li⁷ configured as a first ignition fuel material. In an example, the device is placed inside of a cylindrical shaped hohlraum. In an example, the pB¹¹, PB¹⁰ or a material which include at least pB¹¹ or PB¹⁰ is coated on a surface of outside of the hohlraum. In an example, the hohlraum is subjected to a plurality of nanosecond pulsed lasers with a pulse width of 1 ns to 40 ns and a total pulse energy of 1~10 megajoule irradiated into a surface of an interior region of the hohlraum to generate X-rays through one or more sides of one or more opening windows of the hohlraum causing a plurality of X-rays to irradiate the device for ignition of the device.

In an example, Figure 11 is a simplified diagram illustrating a target used for inertial confinement fusion (ICF) in an example according to the present invention. The target configuration features a layered structure wherein the DTLi⁶ or DTLi⁷ fuel of the first fuel region with the lowest ignition temperature among whole fuel layers is sandwiched by DLi⁶ of the second fuel region with the higher ignition temperature of 66keV than the DTLi⁶ or DTLi⁷ and pB¹¹ of the third fuel region with the higher ignition temperature of 123keV than the DTLi⁶. DTLi⁶ or DTLi⁷ has chemical composition by partial replacement of D in DLi⁶ or DTLi⁷ by T and the atomic number fraction of T in DTLi⁶ or DTLi⁷ is arbitrary as long as DTLi⁶ or DTLi⁷ can exist as a solid material before the laser irradiation. In this structure of the target, the thermonuclear burn of the first fuel material layer of DTLi⁶ or DTLi⁷ is initiated first by the achievement of the fusion ignition density and temperature with the nanosecond pulsed laser-driven implosion and the ignition because DTLi⁶ or DTLi⁷ of the first fuel region has the lowest ignition temperature when the target is compressed to at least 100 times to 20,000 times (and greater) by the nanosecond pulsed lasers with a pulse width of 1 ns to 40 ns and a total pulse power density of 1 × 10¹³ W/cm² to 1 × 10²⁰ W/cm² on the target, including variations. This method is called as a center ignition method.

In an example, Figure 12 is a simplified diagram illustrating another target used for inertial confinement fusion (ICF) in an example according to the present invention. The target configuration features a layered structure wherein the DTLi⁶ fuel of the first fuel region with the lowest ignition temperature among whole fuel layers is sandwiched by DLi⁶ of the second fuel region with the higher ignition temperature of 66keV than the DTLi⁶ and pB¹¹ of the third fuel region with the higher ignition temperature of 123keV than the DTLi⁶. DTLi⁶ has chemical composition by partial replacement of D in DLi⁶ by T and the atomic number ratio of T in DTLi⁶ is arbitrary as long as DTLi⁶ can exist as a solid material before the laser irradiation. In the center of the DLi⁶ of the second fuel region, the void is formed like a shell shape in this invention to compress the target to accelerate the plasma of each fuel into the center region with a high kinetic energy. Then, at the center region of the void, the kinetic energy of the plasma becomes an internal energy to form a hot spot and then ignition thereafter. In this structure of the target, the thermonuclear burn of the first fuel material layer of DTLi⁶ is initiated first by the achievement of the fusion ignition density and temperature with the nanosecond pulsed laser-driven implosion and ignition because DTLi⁶ of the first fuel region has the lowest ignition temperature when the target is compressed to at least 100 times to 20,000 times (and greater) by the nanosecond pulsed lasers with a pulse width of 1 ns to 40 ns and a total pulse power density of 1 × 10¹³ W/cm² to 1 × 10²⁰ W/cm² on the target, including variations. This method is called as a center ignition method.

Present techniques of novel targets of Figures 4 and 5 are composed of materials which are solid at room temperature. All of materials of DTLi⁶, DTLi⁷, DLi⁶ and pB¹¹ are solid at room temperature. Present technique of novel targets is not required to cool to cryogenic temperature to make a solid DT. Also, cost of these materials is much cheaper than that of DT. Thus, using the present technique of novel target, the cost of target is reduced dramatically in comparison with that of DT target of $0.5M in an example.

In an example, the picosecond laser light sources outputs a picosecond pulse focused to the target device configured with a laser power uniformity of a wavefront using one or more deformable mirrors or a cavity device. In an example, nanosecond laser light sources and the picosecond laser light sources emit, respectively a plurality of nanosecond pulses and a plurality of picosecond pulses configured to focus to the target using one or more concave mirrors or lens. In an example, at least one of the nanosecond pulse laser light sources has a different emission wavelength, phase, or both of the wavelength and phase from one or more of the others nanosecond pulse laser light sources.

In an example, the device has variations. In an example, the device is a solid characterizing the center region, the second outer region, the third outer region and the fourth outer region. Additionally, the device has two fuel material regions. In an example, the first fuel material region is composed of D(deuterium)T (tritium) Li⁶(lithium) or DTLi⁷. In an example, the second fuel material region is composed of pB¹¹(boron) or pB¹⁰. In an example, the device has three fuel material regions. In an example, the first fuel material region is composed of D(deuterium)T (tritium) Li⁶(lithium) or DTLi⁷. In an example, the second fuel material region is composed of DLi⁶ or DLi⁷. In an example, the third fuel material region is composed of pB¹¹ or pB¹⁰. In an example, a different material from any of the fuel materials is inserted between each pair of fuel material regions or between any one of the fuel material regions and an ablation material enclosing the device.

In an example, the device has a cone-shaped groove or metal cone formed at least through the second fuel material region. In an example, the device has a tip of the cone-shaped groove or metal cone is located near or inside of the first fuel material region. In an example, the cone-shaped groove or metal cone is characterized by more than one and less than 10. In an example, the cone-shaped groove or metal cone comprises a surface that is coated by a metal with a high Z value selected from at least one of a gold (Au), a lead (Pb), and other high Z value material.

In an example, at least one of the second fuel material region or third fuel material region comprises a borane of BₓH_{y} or B₁₀H₁₄.

In an example, the target device is irradiated using a nanosecond pulse with a pulse width of 1ns~40ns and a total pulse power density of 1×10¹³W/cm²∼1×10¹⁸W/cm² and then the target device is compressed at least 100 times to 20,000 times by a laser ablation. In an example, the target device is irradiated using a picosecond or femtosecond laser light sources that outputs a picosecond or femtosecond pulse focused on the target device with a spot size of 5 microns ~50microns and a total peak pulsed power density of 1×10¹⁷W/cm²∼1×10²⁴W/cm². In an example, the target device is irradiated using a picosecond or femtosecond laser light sources that outputs a picosecond or femtosecond pulse focused to a cone-shaped groove or a metal cone on the target device with a total peak pulsed power density of 1×10¹⁷W/cm²∼1×10²⁴W/cm². In an example, the picosecond laser light sources focus to a small laser spot size of 5microns~ 50 microns on the cone-shaped groove or the metal cone. In an example, the picosecond or femtosecond laser light source outputs a picosecond or femtosecond pulse focused to the target device or the cone-shaped groove on the target while a nanosecond pulse with a pulse width of 1ns~40ns and a total pulse power density of 1×10¹³W/cm²∼1×10¹⁸W/cm² is irradiated into the target device.

In an example, the target device has a diameter of 1mm ∼ 9mm and characterized by a sphere shape. In an example, the target device has a cylindrical shape.

In an example, the device has a void region configured within a vicinity of a center region of the target device. In an example, the device further comprises a cone or cylindrical shaped region configured from an outer region through the one or more fuel material regions to the void region such that a picosecond pulse laser characterized by a pulse width of 50~500 picoseconds, a total pulse energy of 1kJ~500kJ, and a frequency of 1~20Hz is irradiated through the cone or cylindrical shaped region to a portion of one or more of the fuel material regions. In an example, the outer region is irradiated by a plurality of nanosecond pulse lasers characterized with a pulse width of 1ns~40ns and a total pulse energy of 1~20MJ to cause a compression and implosion of at least one of the fuel material regions. In an example, the void region is characterized by a hot spark at the central region. In an example, the picosecond pulse laser is configured to irradiate into the void region, and ablate one of the inner surfaces during an implosion of an inflight outer region that is compressed in the implosion towards the center region, resulting in an ablated plasma colliding in the central region to form a hot spark. In an example, after the hot spark, a deceleration phase begins such that a laser energy supplied is converted into an energy of the hot spark through kinetic energy of the ablated plasma of the inflight outer region, thus enabling introduction of the energy for the hot spark from an energy.

In an example, the device further comprises a picosecond pulse laser configured in the void region within the device undergoing compression, wherein a timing of introducing the picosecond pulse laser at a moment after an implosion speed reaches maximum or near maximum and before a final phase of a compression acceleration when the void region still exists in the central region. In an example, the device further comprises a picosecond pulse laser characterized by a pulse width ranging from 50~500 picoseconds. In an example, the device further comprising a picosecond pulse laser is amplified using an optical enhancement cavity (OEC). In an example, the picosecond pulse laser is configured from an outer shell region to an interior region.

In an example, the device has a cone or cylindrical shaped region comprising a high atomic number of materials including at least one of a gold, a lead, a titanium or a compound material to avoid interference on a path of the picosecond pulse laser due to an expansion plasma generated by an implosion process.

In an alternative example, the present invention provides a fusion fuel target device for inertial confinement fusion (ICF). The device has a first fuel material region characterized by a first ignition temperature, the first fuel material region and a second fuel material region coupled to the first fuel material region. The device has optionally, a third fuel material region configured such that the first fuel material region being sandwiched between the second fuel material region and the third material fuel region. The second fuel material is configured within a center region and has a higher ignition temperature than the first fuel material region. In an example, the third fuel material region is an outer region and having a higher ignition temperature than the first fuel material region.

In an example, the third fuel material region comprising a converter layer which upon a collision with neutrons generated during a fusion reaction, accepts a momentum energy of neutrons and transfers the momentum energy into a kinetic energy of charged particles such that the charged particles escape outwardly from the center region. In an example, the first fuel material region is configured for an ignition before the second fuel material region or the third fuel material region. In an example, the third material fuel region is characterized by both a converter and a thermonuclear burn. In an example, the third fuel material region is surrounded by an ablation material that serves to absorb an incident laser energy and ablate outwardly to drive an implosion. In an example, the third fuel material region is characterized as both a converter and an ablator.

In an example, the first fuel material region includes at least one of a D (deuterium) T (tritium)DLi⁶ (deuterium-lithium-6), or a DTLi⁷ (deuterium-lithium-7). In an example, the second fuel material region includes a DLi⁶ (deuterium-lithium-6) or a DLi⁷ (deuterium-lithium-7). In an example, the third fuel material region includes at least one of a P (or H)B¹¹ or a pB¹⁰. In an example, the third fuel material region includes at least one of a (hydrogen)H, P (or H)-B¹¹ or pB¹⁰, or low atomic number particles.

In an example, the device is subjected to a plurality of nanosecond pulse lasers with a pulse width of 1 ns to 40 ns and a total pulse power density of 1 × 10¹³ W/cm² to 1 × 10²⁰ W/cm² irradiated on the device, compressing the device to at least 100 times to 20,000 times at concurrent with a thermonuclear burn initiated in the first fuel material region. In an example, the device is characterized by a thermonuclear burn of the first fuel material region initiated by a picosecond or femtosecond laser from an outside of the device having a total peak laser power density of 1 × 10¹⁷ W/cm² to 1 × 10²⁴ W/cm² on the device while a nanosecond pulse laser with a pulse width of 1 ns to 40 ns and a total pulse power density of 1 × 10¹³ W/cm² to 1 × 10¹⁸ W/cm² irradiated on the device.

In an example, the device further comprises a cone-shaped groove or a metal cone configured within the device. In an example, the cone-shaped groove or the metal cone comprising a tip configured within a vicinity or inside of the first fuel material region. In an example, the cone-shaped groove or metal cone comprises an outer surface, the outer surface coated by a metal material with a high Z value, the metal material being at least one of a gold (Au), a lead (Pb) and other suitable high Z metal materials. In an example, the picosecond or femtosecond laser is irradiated through the cone shaped groove configured into the device. In an example, the picosecond laser is configured to focus to a laser spot size of 5 microns∼ 50 microns on the cone shaped groove or the metal cone configured on the device.

In an example, the device has a void region configured within a vicinity of a center region of the device. The cone or cylindrical shaped region is configured from an outer shell region through one or more of the fuel material regions to the void region such that a picosecond pulse laser characterized by a pulse width of 50~500 picoseconds, a total pulse energy of 1kJ~500kJ, and a frequency of 1~20Hz is irradiated through the cone or cylindrical shaped region to a portion of one or more of the fuel material regions.

In an example, the device is characterized as being spherical in shape with a diameter of 1 mm to 10 mm. In an example, the device further comprises a different material from any one of the first fuel material region, second fuel material region, or third fuel material region (collectively the fuel material regions) is configured between at least a pair of the fuel material regions or between any one of the fuel material regions and an ablation material.

Above techniques of the Figures, when any kinds of material are inserted between each fusion material region or between fusion material region and ablation material should be belong to present technique because those inserted materials do not change of the present invention concept.

Above techniques of the Figures, the timing between irradiation of picosecond or femtosecond laser light source and the nanosecond pulse laser light source is: picosecond or femtosecond laser light sources outputs a picosecond or femtosecond pulse focused to metal cone and the cone-shaped groove on the target with a total peak pulsed power density of 1×10²⁰W/cm²~1×10²⁴W/cm² while nanosecond pulse with the pulse width of 1ns~40ns and the total pulse power density of 1×10¹³W/cm²∼1×10¹⁸W/cm² is irradiated into the target and then the target is compressed at least 100 times to 20,000 times by the laser ablation.

In the present techniques, picosecond pulse laser source means the laser source has a pulse width from 1 picosecond to 900 picoseconds. Nanosecond pulse laser source means the laser source has a pulse width from 1 nanosecond to 40 nanoseconds. Femtosecond pulse laser source means the laser source has a pulse width from 10 femtoseconds to 1000 femtoseconds. The wavelength of nanosecond, picosecond and femtosecond laser sources are from UV (350 nm) to IR (1060 nm).

In an example, the device is a solid characterizing the first fuel material region, the second fuel material region, and the third fuel material region. In an example, the target device is a solid at room temperature. In an example, a melting temperature of HLi is 692C. DLi and DTLi would have a similar melting temperature. Borane of B₁₀H₁₄ used as pB11 has a melting temperature of 100C. In an example, borane is coated by a polymer to protect an evaporation of toxic material from the borane. In an example, the polymer has a melting temperature ranging from 50-100C depending on the type of material. Accordingly, solid means that at least temperatures of 10-50C the target should be solid in an example.

Of course, other variations, alternatives, and modifications can exist.

While the above is a full description of the specific examples, various modifications, alternative constructions and equivalents may be used. In an example, the high intensity laser forms a resonator between the pair of mirror devices using constructive interference of each of the laser beams to cause ignition of a fuel pellet. In an example, the first path with the high intensity pulse laser is provided in a resonator device. In an example, the present invention provides a system and method to generate a concentric or spherical resonator within a reaction region to focus laser light at a center of the reactor. Additionally, the terms first, second, third, and final do not imply order in one or more of the present examples. In other examples, various numerical limits may not be limited in some examples. Moreover, the present target can be used for other applications. Therefore, the above description and illustrations should not be taken as limiting the scope of the present invention which is defined by the appended claims.

## Claims

1. A fusion fuel target device for inertial confinement fusion (ICF), the device comprising:
a first fuel material region **characterized by** a first ignition temperature, the first fuel material region;
a second fuel material region coupled to the first fuel material region; and
optionally, a third fuel material region configured such that the first fuel material region being sandwiched between the second fuel material region and the third material fuel region, the second fuel material being configured within a center region and having a higher ignition temperature than the first fuel material region, the third fuel material region being an outer region and having a higher ignition temperature than the first fuel material region.

2. The device of claim 1 wherein the third material fuel region is **characterized by** both a converter and a thermonuclear burn.

3. The device of claim 1 wherein the third fuel material region is surrounded by an ablation material that serves to absorb an incident laser energy and ablate outwardly to drive an implosion.

4. The device of claim 1 wherein the third fuel material region is characterized as both a converter and an ablator.

5. The device of claim 1 wherein the first fuel material region includes at least one of a D (deuterium) T (tritium), a DHe³, a DD, or a DLi⁶ (deuterium-lithium-6), or a DLi⁷ (deuterium-lithium-7).

6. The device of claim 1 wherein the second fuel material region includes at least one of a DHe³, a DLi⁶ (deuterium-lithium-6), a DLi⁷ (deuterium-lithium-7), a H(hydrogen)Li⁶, a HLi⁷, a pB¹¹ or a PB¹⁰.

7. The device of claim 1 wherein the third fuel material region includes at least one of a P (or H)B¹¹ or a pB¹⁰.

8. The device of claim 1 wherein the third fuel material region includes at least one of a (hydrogen)H, P (or H)-B¹¹ or pB¹⁰, or low atomic number particles.

9. The device of claim 1 further comprising a cone-shaped groove configured within the device.

10. The device of claim 9 wherein the cone-shaped groove comprising a tip configured within a vicinity or inside of the first fuel material region.

11. The device of claim 9 wherein the cone-shaped groove comprises an outer surface, the outer surface coated by a metal material with a high Z value, the metal material being at least one of a gold (Au), a lead (Pb) and other suitable high Z metal materials.

12. The device of claim 1 wherein the device is spherical in shape with a diameter of 1 mm to 10 mm.

13. The device of claim 1 further comprising a different material from any of the first fuel material region, second fuel material region, or third fuel material region (collectively the fuel material regions) is configured between at least a pair of the fuel material regions or between any one of the fuel material regions and an ablation material.

14. The device of claim 1 further a void is formed at a center region of the second fuel region.

15. The device of claim 1 wherein the device is characterized as a solid.
